(19) Europäisches Patentamt
European Patent Office
Office européen des brevets

(11) Publication number : **0 213 252 B1**

(12) **EUROPEAN PATENT SPECIFICATION**

(45) Date of publication of patent specification :
06.02.91 Bulletin 91/06

(51) Int. Cl.⁵ : **B27K 3/36, B27K 3/50**

(21) Application number : 85850268.5

(22) Date of filing : 28.08.85

(54) **A process for improving dimensional stability and biological resistance of lignocellulosic material.**

(43) Date of publication of application :
11.03.87 Bulletin 87/11

(45) Publication of the grant of the patent :
06.02.91 Bulletin 91/06

(84) Designated Contracting States :
AT BE CH DE FR GB IT LI LU NL SE

(56) References cited :
DE-A- 3 417 605
US-A- 2 417 995
CHEMICAL ABSTRACTS, vol. 81, no. 8, 26th
August 1974, page 116, no. 39319h, Columbus,
Ohio, US; & SU - A - 391 950 (LATVIAN
AGRICULTURAL ACADEMY) 27-07-1973
CHEMICAL ABSTRACTS, vol. 81, no. 8, 26th
August 1974, page 116, no. 39320b, Columbus,
Ohio, US; & SU - A - 391 951 (LATVIAN
AGRICULTURAL ACADEMY) 27-07-1973
CHEMICAL ABSTRACTS, vol. 98, no. 24, 13th
June 1983, page 91, no. 200096w, Columbus,
Ohio, US; & JP - A - 58 32 807 (DAIKEN KOGYO
CO., LTD.) 25-02-1983

(56) References cited :
CHEMICAL ABSTRACTS, vol. 81, no. 8, 26th
August 1974, page 113, no. 39277t, Columbus,
Ohio, US; & SU - A - 391 923 (INST. OF WOOD
PULP CHEMISTRY, ACADEMY OF SCIENCES,
LATVIAN S.S.R.; LATVIAN AGRICULTURAL
ACADEMY) 27-07-1973
CHEMICAL ABSTRACTS, vol. 83, no. 8, 25th
August 1975, page 235, no. 62315d, Columbus,
Ohio, US; & SU - A - 454 131 (INSTITUTE OF
WOOD PULP CHEMISTRY, ACADEMY OF
SCIENCES, LATVIAN S.S.R.) 25-12-1974
CHEMICAL ABSTRACTS, vol. 103, no. 20, 18th
November 1985, page 88, no. 162082a,
Columbus, Ohio, US; & SU - A - 1 167 009
(INSTITUTE OF THE MECHANICS OF
METAL-POLYMER SYSTEMS, ACADEMY OF
SCIENCES, BELORUSSIAN S.S.R.) 15-07-1985

(73) Proprietor : A-cell Acetyl Cellulosics AB
Sotenäsvägen 64
S-433 64 Partille (SE)

(72) Inventor : Rowell, Roger M.
4510 Gregg Road
Madison, WI 53705 (US)
Inventor : Simonson, Rune
Sotenäsvägen 64
S-433 64 Partille (SE)
Inventor : Tillman, Anne-Marie
Byggmästaregatan 5
S-421 68 VÄSTRA FRÖLUNDA (SE)

(74) Representative : Hagelberg, Anders Torvald
Sverker et al
Albihn West AB Stora Nygatan 15
S-411 08 Göteborg (SE)

EP 0 213 252 B1

## Description

Field of Invention

The present invention relates to the chemical treatment of lignocellulosic materials by acetylation with acetic anhydride in the absence of any cosolvent or added catalyst. More particularly, the invention relates to the treatment of wood and its derivative materials to obtain increased dimensional stability while improving resistance to biological degradation. The invention also relates to the treatment of fibrous lignocellulosic materials such as jute.

Description of the prior art

Although lignocellulosic material possesses many unique and desirable properties, it has several undesirable properties which have limited its use for many applications. The physical and chemical properties of lignocellulosic material are the result of the structure of the cell wall components both individually and collectively.

For example, wood changes dimension with changing moisture content because the cell wall polymers contain hydroxyl and other oxygen-containing groups that attract moisture through hydrogen bonding. This moisture swells the cell wall, and the wood expands until the cell wall is saturated with water. Water, beyond this point, is free water in the void structure and does not contribute to further expansion. This process is reversible, and shrinkage occurs as moisture is lost.

Lignocellulosic material is biologically degraded because organisms recognize the polysaccharides in the cell wall and have very specific enzyme systems capable of hydrolyzing these polymers into digestible units. Because high-molecular-weight cellulose is primarily responsible for strength in wood, strength is lost as this polymer undergoes biological degradation through oxidation, hydrolysis, and dehydration reactions.

Because dimensional instability and biological degradation are chemical phenomena, it is possible to improve both of these undesirable properties of lignocellulosic material by changing the basic chemistry of the cell wall polymers. By chemically modifying the cellulose and hemicellulose components, for example, the highly specific, biological enzymatic reactions cannot take place because the chemical configuration and molecular conformation of the substrate have been altered. Bulking the cell wall by reacting chemicals to the cell wall polymers reduces its tendency to swell with changes in moisture because the lignocellulosic material becomes in a partially, if not completely, swollen state by the reaction.

If hydroxyl groups in the cell wall polymers are esterified with acetic anhydride, both dimensional stability and resistance to biological attack can be achieved.

Wood flour or sawdust was acetylated by Fuchs (Ber. 61B : 948 ; 1928) and Horn (Ber. 61B : 2542 ; 1928) using acetic anhydride containing 0,25 percent sulfuric acid, while Suida and Titsch (Ber. 61B : 1599; 1928) used acetic anhydride followed by acetic anhydride/pyridine in two steps, the total treatment time being 35 h. In 1930, Friese (Ber. 63B : 1902) acetylated powdered wood with mixtures of acetic acid and acetic anhydride catalyzed by sulfuric acid. Suida (Austrian Patent 122,499 ; 1930) reacted wood with acetic anhydride using a tertiary organic base as a catalyst.

Ridgway and Wallington (British Patent 579,255 ; 1946) acetylated wood, either veneer or ground, with acetic anhydride using a multivalent metal halide as catalyst. The preferred treatment was with a mixture of acetic anhydride, acetic acid, and zinc chloride for 24 hours at 38 to 50°C.

Stamm and Tarkow (US patent 2,417,995 (1947)) treated oven-dried wood veneers with a moisture-free acetylation medium containing acetic anhydride mixed with other components such as a tertiary amine and acetone. The preferred treatments were carried out as a vapor phase operation with a mixture of acetic anhydride and pyridine. The lignocellulosic material is dried until its moisture content has been reduced to 6% or less, preferably about 2%. The acetylating medium contained acetic anhydride, substantially free from acetic acid. This acetylation procedure has not had commercial acceptance because of certain disadvantages, such as ; pyridine forms complexes making recovery difficult ; if the reaction temperature is too high, the pyridine darkens the wood ; if the reaction temperature is too low, the reaction period is relatively long; and, the various operations require a substantial amount of handling of noxious or flammable chemicals.

In 1963 Goldstein and Weaver (US Patent 3,094,431) described an acetylation procedure that eliminated the catalyst. Acetic anhydride was combined with xylene to acetylate wood at 105°C and an absolute pressure of 150 to 170 psi (1.0-1.2 MPa). While the procedure eliminated the use of a catalyst, it introduced a volatile, flammable organic cosolvent that required special handling and complicated the excess reagent and byproduct recovery.

It has also been shown by Klinga and Tarkow (TAPPI Vol. 49, No. 1, 1966) that it is possible to obtain a stabilization of hardboard by "an uncatalyzed vapor-phase acetylation with acetic anhydride". However, the board contained aluminium sulfate which could act as a catalyst. The necessary exposition time was, however, very long, "overnight heating was adopted".

Although several methods of acetylation designed for stabilizing the dimensions or for biological resistance of wood and other lignocellulosic materials accordingly have been suggested, all have failed in achieving any real commercial significance. In general, the prior art methods suffer from one or more of the following disadvantages : The process is too cumbersome or time consuming, the process is too complicated, the process is excessively expensive, the process requires oven-dried wood, or the process imparts undesirable properties to the product.

Evidently there are disadvantages connected to all the methods referred to. In fact, no method according to the prior art is suitable for acetylation in industrial scale. Stabilization by acetylation has therefore been utilized in a very low degree in spite of the advantages ; e.g. the stabilized wood and wood products will have by use as a construction material. The high production cost and other drawbacks mentioned connected to the known methods have been a hindrance to their commercialization.

## The object and advantages of the invention

The primary objective of this invention is to develop a process for acetylating lignocellulosic materials which does away with complex reaction mixtures and expensive pressure-treating equipment necessary with processes in the prior art. A second objective of this invention is a process which will increase dimensional stability and biological resistance to lignocellulosic materials. Other objectives and advantages will become apparent hereinafter from the detailed description and drawing.

The present invention is believed to have several advantages over the prior art in treating wood, its derivative material, or other lignocellulosic materials :

(1) Eliminates the need for an added catalyst.
(2) Eliminates the use of any cosolvents or diluents.
(3) Eliminates the need for high pressures during treatment.
(4) Eliminates the need of a manifold excess of acetic anhydride.
(5) Reduces the time of treatment.
(6) Can be used to treat partially dried or dry lignocellulosic material.
(7) Greatly simplifies the recovery of excess reagents and byproducts.

## Brief summary of the invention

In connection with the invention it has now been found that partially dried or dry lignocellulosic material can be acetylated in a process which eliminates both extra catalyst and organic cosolvent. The procedure does not require high pressure and greatly reduces the reaction time required to give high levels of dimensional stability and biological resistance.

A convenient way of carrying out this invention is as follows : Partially dried or dry lignocellulosic material is impregnated in the following way. If it is in the form of thin or disintegrated material (boards, veneers, flakes, particles or fibers) it is loaded in a stainless steel dipping basket which is then dipped into liquid acetic anhydride for a period of time, the length of which depends on the thickness of the material being impregnated. If the material is in the form of partially dried, solid wood boards with a larger cross-section it is easily impregnated with acetic anhydride by a vacuum or vacuum-pressure technique. The material is then drained of excess acetic anhydride and placed in a chamber heated to 120°C. The lignocellulosic material is heated at this temperature for 2 to 8 hours, again the period of time depending on the thickness. A vacuum is applied at 120°C to remove remaining acetic anhydride and byproduct acetic acid. The thus removed treating solution may be reused several times before cleaning up by distillation or regeneration of acetic anhydride.

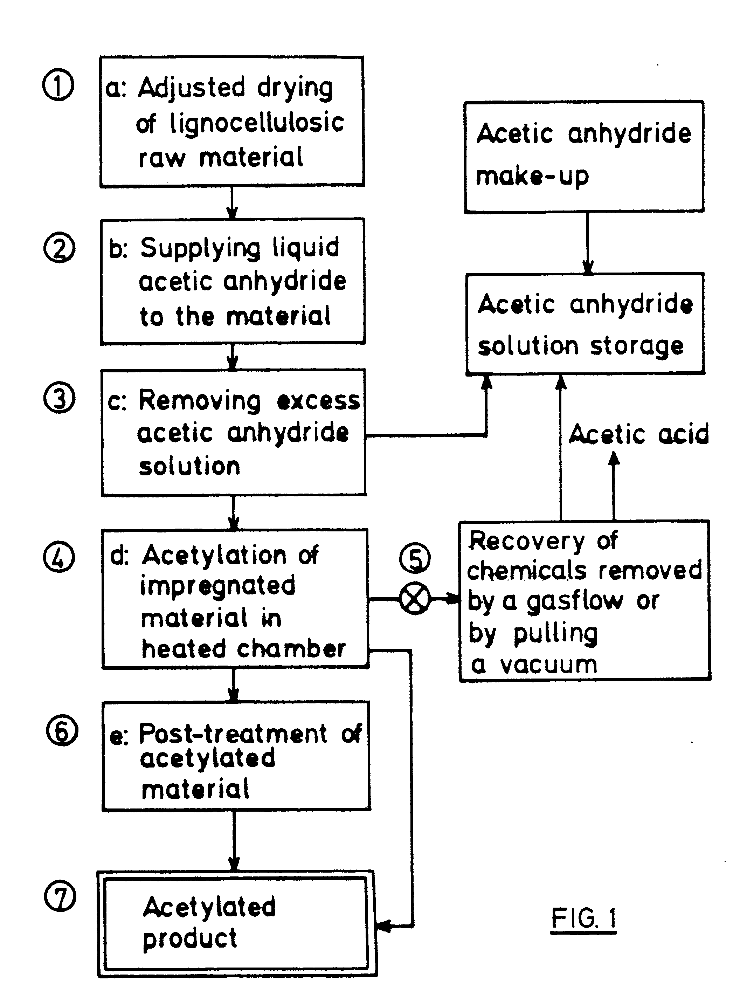

Figure 1 schematically illustrates by flow diagrams the novel process for acetylation of lignocellulosic material.

Wood acetylated by this new procedure shows good dimensional stability (Table VIII and IX) and resistance to attack by brown-rot fungi (Table X) and soft-rot fungi and tunneling bacteria (Table XI).

## General description of the invention

The substance of this invention is a greatly simplified acetic anhydride reaction procedure to acetylate lignocellulosic materials to increase dimensional stability and biological resistance. The partially dried or dry lignocellulosic material is impregnated with liquid acetic anhydride and drained. The impregnated material is placed in a heated, nonpressurized chamber and kept at a temperature of 110 to 120°C for a period of time. While heated, a vacuum is applied to remove excess or unconsumed reagent and byproduct acetic acid, or the vapors produced are removed by a gasflow.

The drawing is a schematic view of a typical procedure for processing lignocellulosic material according to the invention.

Referring to the drawing, the partially dried or dry lignocellulosic material at 1 is supplied with a solution of acetic anhydride for a short period of time at 2. Excess acetic anhydride is drained or, with a disintegrated material, squeezed out from the material at 3. The impregnated lignocellulosic material is heated to 110-120°C in the treatment chamber 4. The temperature is maintained for a period of time, preferably 2 to 8 hours (depending on the size and thickness of the material). A vacuum can be drawn on the heated chamber through 5 for 1 to 3 hours to remove unconsumed acetic anhydride and byproduct acetic acid. This recovered solution can be added back to a storage tank for the solution. The solution can be reused many times before cleaning-up by e.g. fractional distillation is needed. The byproduct acetic acid can be reconverted into acetic anhydride, e.g. by reaction with ketene. If found necessary, the acetylated material at 7 can be post-treated at 6 with chemicals, preferably ammonia that convert remaining acetic anhydride and acetic acid into acetate.

As is evident from the description, it has, in connection with the invention, been established the surprising effect that, if wood in solid form or a product containing wood or other lignocellulosic material is impregnated with acetic anhydride and then treated with heat, the acetylation will be obtained in a relatively short time without use of catalysts, cosolvents or diluents. As will be evident from the following examples, a treatment for a period of time of 1 to 6 hours will be sufficient. For smaller dimensions of solid wood and for chips and flakes as well as fibrous lignocellulosic material, a shorter period of time, 1-2 hours, will be sufficient while thicker wood has to be treated for a longer period of time. The duration of treatment depends in the first hand on the period of time necessary for the heat to penetrate the material, which in turn depends on the dimension of the cross-section.

A measure of the degree of acetylation of the lignocellulosic material is the weight gain as a result of the treatment. A control of the same has shown that a sufficient acetylation is reached by the process according to the invention by means of a treatment of the duration mentioned above.

The following description and examples are presented as further illustration of the invention.

Detailed description and examples

The new and simple method of acetylation according to the invention is based on the characteristic process steps a, b, c, and d referred to in fig. 1. The practical performance of each step can be varied within the scope of the appended claims, and is further illustrated below.

Step a involves an adjusted drying of the lignocellulosic material to be acetylated. Although the acetylation reaction can be carried out on lignocellulosic material with a high moisture content, an increasing content of water yields an increasing formation of byproduct acetic acid due to hydrolysis of the acetic anhydride. To avoid an unnecessarily high consumption of the reagent anhydride, the moisture content should not exceed 20 percent, preferably not exceed 10 percent. For e.g. solid wood boards, drying to a moisture content below about 5% can lead to distortion of the material and formation of cracks, and should accordingly be avoided. Also, when impregnation solid material with a large cross-section, the impregnation with the liquid reagent is favored by the material being in a slightly swollen state, i.e. the material not being completely dry. In the production of particle- and flakeboards, the disintegrated material is normally processed at a moisture content of a few percent, and can conveniently be acetylated at such a moisture content.

In the next step, b, the lignocellulosic material is supplied with liquid acetic anhydride. Depending on the kind and size of the material used, and the total processing to a final product, different process alternatives can be adopted. Lignocellulosic material in the form of finer particles, thin material, or fibers can be supplied with a proper amount of reagent by spraying the material with liquid acetic anhydride. This operation can be carried out when tumbling the material in a suitable equipment thereby ensuring an even distribution of the anhydride to the material. The impregnation of the above mentioned kind of lignocellulosic material can also be done by dripping the material in liquid acetic anhydride, the dipping time being adapted to the dimension of the material used but preferably being less than 15 min.

Spraying and dipping can also be applied to material having larger dimensions, especially when aiming at a surface treatment to a certain depth. The over-all amount of impregnating anhydride can in such a case be low or $\geq$10 percent by weight. Such a dimensional stabilization of the surface layer by acetylation can improve the longterm adhesion of an applied surface coating (paint, varnish etc) and minimize the formation of cracks and the loosening of the coating.

For lignocellulosic material such as solid wood boards with a larger cross-section the liquid acetic anhydride is preferably impregnated into the material by a vacuum or vacuum-pressure technique which ensures a more complete penetration into the entire material body.

In step c, solution of acetic anhydride not impregnated into the lignocellulosic material is removed to prevent handling of a manifold excess of anhydride in the following process steps. The amount of chemicals that needs to be recovered and up-graded is thereby greatly reduced, and so is the cost of the process. Again the kind and size of the lignocellulosic material used allow the removal of excess anhydride to be carried out in different ways. In the simpliest application, the excess is just drained from the impregnation vessel. For lignocellulosic material with a smaller size (e.g. flakes, chips, fibers) the removal of anhydride, kept by the material by surface tension can be facilitated by applying suction allowing the anhydride to be drained through a perforated device supporting the impregnated material. Another alternative is to apply compression forces at a suitable compression ratio to the material, thereby achieving the necessary squeezing action in e.g a drainable pressing device.

After impregnation, the lignocellulosic material is reacted in a heated chamber to a predetermined weight gain accomplished by the addition of acetyl groups to the material. The treatment chamber is kept at a temperature of 80-150°C, preferably 90-130°C. At a temperature below this interval, the reaction rate is too low for practical reasons. At higher temperatures, side-reactions degrading the lignocellulosic material may become too pronounced.

The duration of step d, usually 2 to 8 hours, depends in the first hand on the period of time necessary for the heat to penetrate the material which in turn depends on the dimension of the cross-section of the material. The heating also promotes the diffusion of anhydride to reactive sites in the material. Vapor of acetic anhydride and acetic acid (and volatile components of the material) produced during heating can be removed by a gasflow through the reactor or by pulling a vacuum, and the chemicals are recovered by condensation, preferably recovered and up-graded by fractional condensation in a distillation tower. A complete separation of acetic anhydride from acetic acid is thereby not necessary, since the flow of anhydride recirculated to the storage tank may contain acetic acid (cf. Example IV). The by-product acetic acid can be reconverted into acetic anhydride e.g. by reaction with ketene.

The withdrawal of vapor from the reactor can in part be carried out at an early stage of the heating period as a way to adjust the ratio of acetic anhydride to lignocellulosic material, thereby achieving in combination with step c an impregnating amount of acetic anhydride of 10 to 250 percent by weight calculated on oven-dried lignocellulosic material. The main part of the vapor is, however, withdrawn at the end of the heating period and consists of unconsumed anhydride and by-product acetic acid.

The time required to withdraw the vapor is included in step d and is usually 1-3 hours, again the period of time being dependent on the dimension of the material.

The acetylated product can, if found necessary, be post-treated in a subsequent step e (see fig. 1) with chemicals that convert remaining minor amounts of acetic anhydride and acetic acid into acetate. Such a treatment has proven to eliminate the slight smell of anhydride and acetic acid that can be noticed in the further handling of the material to manufacture a final product. Preferably, ammonia can be introduced in the reactor following step d, but chemicals giving in addition an improved fire retardancy to the product may also be used in a separate step.

## Example I

Wood samples of different species (cf. Table I) with the dimensions 8×50×150 mm were oven-dried to 3 percent moisture content. The samples were submerged in liquid acetic anhydride for 5 minutes. Excess reagent was allowed to drain from the wood for 5 minutes. The acetic anhydride to wood ratio was about 0.8 w/w. The wood was placed in a preheated cylinder at 120°C and maintained for 4 hours at that temperature. A vacuum was applied at 120°C for 2 hours. The treated samples were removed from the cylinder and air conditioned for an additional 24 hours.

The weight gains obtained for the different wood species are shown in Table I.

## Table I

| Species | Weight gain due to acetylation, % |
|---|---|
| Scandinavian pine | 18-20 |
| Ponderrosa pine | 18-22 |
| Douglas-fir | 18-21 |
| Maple | 16-18 |
| Aspen | 16-19 |

### Example II

Chips or flakes of different wood species (cf. Table II) were oven-dried to 3 percent moisture content. The samples were placed in a stainless steel basket and dipped in liquid acetic anhydride for 1 minute. Excess reagent was allowed to drain from the samples for 3 minutes. The acetic anhydride to wood ratio was about 1.0 w/w for the softwood material and about 1.5 w/w for the hardwood material. The samples were placed in a preheated cylinder at 120°C and maintained for 2 hours at that temperature.

The solution obtained by condensating the vapor drawn from the cylinder consists of approximately 55% unreacted acetic anhydride (38% of original solution in wood) and 45% byproduct acetic acid with minor amounts of wood extractives. The components can be separated by fractional distillation and the acetic acid reconverted to acetic anhydride by reaction with ketene.

The solution can be added back to the initial impregnating solution and reused many times.

The weight gains for the different species are shown in Table II.

## Table II

| Species | Weight gain due to acetylation, % |
|---|---|
| Scandinavian pine chips | 18-22 |
| Douglas-fir flakes | 16-19 |
| Maple flakes | 16-19 |
| Aspen flakes | 16-19 |

### Example III

Chips or flakes of different wood species (cf. Table III) with a moisture content of 20 percent were treated as given in Example II. The results of these reactions are shown in Table III.

## Table III

| Species | Weight gain due to acetylation, % |
|---|---|
| Scandinavian pine chips | 16-18 |
| Douglas-fir flakes | 16-18 |
| Aspen flakes | 16-19 |

### Example IV

In order to simulate a recirculation of solution recovered from earlier acetylation treatments, samples of oven-dried Scandinavian pine wood chips were dipped as described in Example II in solutions of acetic anhydride and acetic acid of various concentrations. The samples were placed in a preheated cylinder at 120°C and maintained for 2 hours at that temperature. Recovery of reagents and byproducts are as given in Example I. The weight gains at the different acetic acid concentrations in the dipping solution are shown in Table IV.

## Table IV

| Sample | Concentration of acetic acid in dipping solution, % | Weight gain due to acetylation, % |
|---|---|---|
| Scandinavian | 5 | 18.5 |
| pine chips | 13 | 18.7 |
| | 30 | 17.5 |
| | 38 | 17.1 |
| | 53 | 15.2 |

### Example V

Wood samples of Scandinavian pine with the dimensions 25×12×1,5 cm and with a moisture content of 5% were placed in a stainless steel cylinder. A vacuum was applied to the cylinder for 30 minutes whereafter it was filled with liquid acetic anhydride. The wood was impregnated with acetic anhydride for 2 hours at atmospheric pressure. Excess acetic anhydride was drained from the cylinder which was then closed and heated to 110°C. The acetic anhydride to wood ratio was about 0.5 w/w. After a reaction time of 2 hours a vacuum was applied for 2.5 hours at 110°C. The treated samples were removed from the cylinder and air conditioned for 7 days. The average weight gain was 22 percent.

### Example VI

Fibrous lignocellulosic material in the form of jute cloth was dipped for 1 min in liquid acetic anhydride. Excess anhydride was allowed to drain from the material yielding an acetic anhydride to fiber ratio of approximately 1.0 w/w. The impregnated material was then heated in a closed chamber at 120°C for different times. After the reaction, a vacuum was applied, and the samples further treated, as given in Example I.

## Table VI

| Sample | Reaction time at 120°C, hours | Weight gain due to acetylation, % |
|---|---|---|
| Jute cloth | 1 | 12.6 |
| | 2.5 | 13.5 |
| | 4 | 16.7 |

## Example VII

Spruce thermomechanical fiber pulp (TMP) was dipped for 1 min in liquid acetic anhydride. Excess anhydride was squeezed out from the pulp by applying mechanical compression forces to the material yielding an acetic anhydride to fiber pulp ratio of about 2.5 w/w. The impregnated pulp was then heated at 120°C for different times as given in Example VI.

## Table VII

| Sample | Reaction time at 120°C, hours | Weight gain due to acetylation, % |
|---|---|---|
| Spruce TMP | 0.5 | 11.7 |
| | 1 | 22.4 |
| | 2 | 24.8 |
| | 4 | 36.5 |

## Example VIII

Solid wood samples as prepared by the process in Example I as well as chemically untreated wood samples (controls) were measured for dimensional stability (cf. Table VIII).

Calculations for dimensional stability were as follows :

VOLUMETRIC SWELLING COEFFICIENT, S

$$S = \frac{V_2 - V_1}{V_1} \times 100\%$$

where

$V_2$ = wood volume after humidity conditioning or wetting with water

$V_1$ = wood volume of ovendried specimen before humidity conditionning.

ANTI-SHRINK EFFICIENTY, ASE

8

$$ASE = \frac{S_1 - S_2}{S_1} \times 100\%$$

where

$S_2$ = volumetric swelling coefficient for acetylated sample

$S_1$ = volumetric swelling coefficient for untreated sample (control).

**Table VIII**

| Species | Weight gain due to acetylation, % | ASE* |
|---|---|---|
| Scandinavian pine | 19.2 | 75 |
| Ponderosa pine | 19.8 | 72 |
| Douglas-fir | 18.6 | 70 |
| Maple | 16.4 | 74 |
| Aspen | 17.2 | 78 |

* Dimensional stability reported as antishrink efficiency of acetylated sample over control sample.

Example IX

Particleboards and flakeboards made from chips and flakes of different wood species acetylated as given in Example II through Example III were mentioned for dimensional stability according to the testing procedure given in Example VIII. The boards were made with a density of 640 kg/m³ using 6% phenol/formaldehyde adhesive.

## Table IX

| Species | Weight gain due to acetylation, % | ASE* |
|---|---|---|
| Scandinavian pine | 21.7 | 87 |
| | 20.4 | 84 |
| | 19.2 | 75 |
| Douglas-fir | 17.7 | 85 |
| | 16.4 | 82 |
| Maple | 16.4 | 83 |
| Aspen | 18.9 | 92 |
| | 18.5 | 90 |

\* Dimensional stability reported as antishrink efficiency of acetylated sample over control sample.

### Example X

Solid wood as prepared by the process in Example I and flakeboards as given in Example IX made from flakes prepared by the processes in Example II through Example III were tested for decay resistance to brown-rot fungi.

Standard soil block tests were run according to specifications of the Americal Society for Testing and Materials as outlined in D 1413. Acetylated and control blocks, 3/4×3/4×3/8 inch, were placed in test with the fungus Gloephyllum Trabeum. Samples were removed after 12 weeks, and the extent of decay was determined as weight loss based on weight of oven-dried samples before and after testing. Separate samples were water leached for 2 weeks at 25°C, oven-dried, and then placed in test.

Table X

| Species | Weight gain due to acetylation, % | Average percent weight loss+ | |
|---|---|---|---|
| | | Leached | Nonleached |
| Solid wood samples | | | |
| Scandinavian pine | 19.2 | 1.3 | 1.1 |
| Ponderosa pine | 19.8 | 1.5 | 1.5 |
| Douglas-fir | 18.6 | 1.1 | 1.6 |
| Maple | 16.4 | 1.3 | 1.2 |
| Aspen | 17.2 | 2.3 | 1.3 |
| Flakeboards | | | |
| Scandinavian pine | 21.7 | 1.1 | 0.7 |
| | 20.4 | 0.4 | 0.3 |
| | 19.2 | 1.3 | 1.1 |
| Douglas-fir | 17.7 | 1.8 | 1.3 |
| | 16.4 | 1.0 | 1.3 |
| Maple | 16.4 | 2.1 | 1.2 |
| Aspen | 18.9 | 2.5 | 1.6 |

+ Untreated leached control samples lost between 35-60 percent weight during 12 weeks.

Example XI

Solid wood as prepared by the process in Example I and flakeboards as given in Example IX made from flakes prepared by the processes in Example II through Example III were tested for decay resistance to soft-rot fungi and tunneling bacteria.

Solid wood and flakeboard samples, 1×1×1/2 inch, were placed in test in a fungal cellar containing both soft-rot fungi and tunneling bacteria. Samples were inspected after 6 months and rated as follows ; 0 – no attack : 1 – low attack ; 2 – moderate attack ; 3 – heavy attach ; 4 – very heavy attack, 5 – destroyed.

**Table XI**

| Species | Weight gain due to acetylation, % | Rating after 6 months[+] |
|---|---|---|
| **Solid wood samples** | | |
| Scandinavian pine | 19.2 | 0 |
| Ponderosa pine | 19.8 | 0 |
| Douglas-fir | 18.6 | 0 |
| Maple | 16.4 | 0 |
| Aspen | 17.2 | 0 |
| **Flakeboards** | | |
| Scandinavian pine | 21.7 | 0 |
| | 20.4 | 0 |
| | 19.2 | 0 |
| Douglas-fir | 17.7 | 0 |
| | 16.4 | 0 |
| Maple | 16.4 | 0 |
| Aspen | 18.9 | 0 |

[+] Untreated control samples had an average rating of 4.5 after 6 months.

Example XII

Pieces of jute cloth acetylated to different weight gains as given in Example VI were tested for decay resistance in a fungal cellar containing soft-rot and brown-rot fungi and tunneling bacteria. Samples were inspected after 5 months and rated as given in Example XI.

**Table XII**

| Sample | Weight gain due to acetylation % | Rating after 5 months |
|--------|----------------------------------|------------------------|
| Jute cloth | 12.6 | 0 |
|  | 13.5 | 0 |
|  | 16.7 | 0 |

Untreated, control samples of jute were completely destroyed (rating 5) already after 2 months in the fungal cellar.

The invention is not restricted to the illustrative Examples but can also be varied within the scope of the appended claims.

## Claims

1. A catalyst-free process for acetylating lignocellulosic material for improving dimensional stability and biological resistance which involves providing that the material has a moisture content not exceeding 20% supplying acetylation medium free from cosolvents and diluents and being liquid acetic anhydride allowed to contain acetic acid thereby impregnating the same ; removing the acetylation medium not impregnated into the material by drainage ; exposing the impregnated material to heating at a temperature in the range 80-150°C, preferably 90130°C, for a period of time from 2 to 8 hours including recovery of chemicals, which includes a further amount of the acetylation medium being removed by withdrawal of vapors produced during said heating, the acetylation medium being prepared to contain liquid recovered from the drainage step and from the step including the vapor withdrawal and the acetylation medium being supplied in a balanced way to take into account the dimensions of the material and the moisture content of the material to obtain a predetermined weight gain by means of acetylation.

2. A process according to claim 1, where vapor produced during said heating is removed by a gasflow, the chemicals being recovered by condensation, preferably fractional condensation.

3. A process according to claim 1, where said heating includes a period of vacuum treatment, the vapor produced being collected and the chemicals being recovered by condensation, preferably fractional condensation.

4. A process according to claim 1, 2, or 3, where supplying said acetylation medium is performed by spraying the material with said medium.

5. A process according to claim 1, 2, or 3, where supplying said acetylation medium is performed by dipping the material in said medium for a short period of time, preferably less than 15 minutes.

6. A process according to claim 1, 2, or 3, where supplying said acetylation medium to the material is performed by vacuum impregnation.

7. A process according to claim 1, 2 or 3, where supplying said acetylation medium to the material is performed by vacuumpressure impregnation.

8. A process according to claim 4, 5, or 6, where the lignocellulosic material is in the form of veneer, chips, flakes or fibers.

9. A process according to claim 4, 5, 6 or 7, where the impregnating amount of acetylation medium is 10 to 250 percent by weight calculated on oven-dried lignocellulosic material.

10. A process according to claim 4 or 5, where excess acetylation medium not impregnated into the material is removed by drainage by applying compression forces to the material, preferably by passing the material through a drainable pressing device, or by applying suction through a perforated device supporting

13

the impregnated material.

11. A process according to any of the preceeding claims, where the acetylated material is post-treated with chemicals, preferably ammonia that convert remaining acetic anhydride and acetic acid into acetate.

## Ansprüche

1. Katalysator-freies Verfahren zur Acetylierung von Lignocellulosematerial zur Verbesserung der Dimensionsstabilität und der biologischen Beständigkeit, welches unter der Voraussetzung, daß das Material einen Feuchtigkeitsgehalt von nicht über 20% aufweist, folgende Schritte umfaßt :
Zuführen eines Acetylierungsmediums, welches frei von Colösungsmitteln und Verdünnungsmitteln ist und bestehend aus flüssigem Acetanhydrid, welche Essigsäure enthalten kann, besteht, zur Imprägnierung des Materials ; Entfernen des Acetylierungsmediums, welches das Material nicht durchtränkte, durch Ablaufen; Hitzebehandlung des imprägnierten Materials bei einer Temperatur im Bereich von 80-150°C, bevorzugt 90-130°C, für eine Zeitdauer von 2 bis 8 Stunden einschließlich der Wiedergewinnung der Chemikalien, was die Entfernung einer weiteren Menge an Acetylierungsmedium durch Ableiten von während der Erhitzung entstanden Dämpfen einschließt, wobei das Acetylierungsmedium ausgelegt ist, Flüssigkeit zu enthalten, welche aus dem Ablaufschritt und aus dem Schritt, der die Entfernung des Dampfes einschließt, wiedergewonnen wurde und wobei das Acetylierungsmedium in einer ausgewogenen Menge zugeführt wird, um die Materialgröße und den Feuchtigkeitsgehalt des Materials zu berücksichtigen, um eine vorbestimmte Gewichtszunahme durch Acetylierung zu erreichen.

2. Verfahren nach Anspruch 1, wobei der während der Erhitzung entstandene Dampf durch einen Gasstrom entfernt wird, und die Chemikalien durch Kondensation, bevorzugt durch fraktonierte Kondensation, wiedergewonnen werden.

3. Verfahren nach Anspruch 1, wobei das Erhitzen einen Zeitraum zur Vakuumbehandlung einschließt, wobei der entstandene Dampf gesammelt und die Chemikalien durch Kondensation, bevorzugt durch fraktionierte Kondensation, wiedergewonnen werden.

4. Verfahren nach einem der Ansprüche 1,2 oder 3, wobei die Zuführung des Acetylierungsmediums durch Besprühen des Materials mit dem Medium durchgeführt wird.

5. Verfahren nach einem der Ansprüche 1,2 oder 3, wobei die Zufuhr des Acetylierungsmediums durch Eintauchen des Materials in das Medium für eine kurze Zeitdauer, bevorzugt weniger als 15 Minuten, durchgeführt wird.

6. Verfahren nach einem der Ansprüche 1, 2 oder 3, wobei die Zufuhr des Acetylierungsmediums zum Material durch Vakuumimprägnierung durchgeführt wird.

7. Verfahren nach einem der Ansprüche 1,2 oder 3, wobei die Zufuhr des Acetylierungsmediums zum Material durch Vakuumdruckimprägnierung durchgeführt wird.

8. Verfahren nach einem der Ansprüche 4, 5 oder 6, wobei das Lignocellulosematerial in Form von Furnier, Schnitzeln, Flocken oder Fasern vorliegt.

9. Verfahren nach einem der Ansprüche 4, 5, 6 oder 7, wobei die Imprägnierungsmenge an Acetylierungsmedium 10 bis 250 Gewichtsprozent beträgt, bezogen auf ein ofengetrocknetes Lignocellulosematerial.

10. Verfahren nach einem der Ansprüche 4 oder 5, wobei der Überschuß an Acetylierungsmedium, der nicht in das Material eingedrungen ist, durch Ablaufen durch die Ausübung von Druckkräften auf das Material entfernt wird, bevorzugt dadurch, daß das Material eine Ablauf-Preßvorrichtung passiert, oder durch Absaugen durch eine Siebvorrichtung, auf welcher das imprägnierte Material aufliegt.

11. Verfahren nach einem oder mehreren der vorhergehenden Ansprüche, wobei das acetylierte Material mit Chemikalien, bevorzugt Ammoniak, nachbehandelt wird, welche das verbleibende Acetanhydrid und die Essigsäure zu Acetat umwandeln.

## Revendications

1. Un procédé exempt de catalyseur pour l'acétylation de la matière lignocellulosique en vue d'améliorer la stabilité dimensionnelle et la résistance biologique ledit procédé consistant à fournir ladite matière avec une teneur en humidité ne dépassant pas 20%, à fournir le milieu d'acétylation exempt de cosolvants et de diluants, et constitué d'anhydride acétique liquide pouvant contenir de l'acide acétique pour imprégner ladite matière ; à séparer le milieu d'acétylation non imprégné dans la matière par égouttage ; à exposer la matiére imprégnée à un chauffage à une température comprise dans l'intervalle de 80-150°C, de préférence de 90-130°C pendant une période de temps de 2 à 8 h incluant la récupération des produits chimiques, ledit procédé incluant la séparation d'une quantité supplémentaire de milieu d'acétylation par soutirage des vapeurs produites durant ledit chauffage, ledit milieu d'acétylation étant préparé pour contenir le liquide récupéré de l'étape d'égouttage et de l'étape incluant le soutirage des vapeurs, et le milieu d'acétylation est fourni d'une manière équilibrée pour prendre en considération les dimensions de la matière et la teneur en humidité de la matière afin d'obtenir un gain de poids prédéterminé par acétylation.

2. Un procédé selon la revendication 1, selon lequel la vapeur produite durant ledit chauffage est éliminée par un courant de gaz, les produits chimiques étant récupérés par condensation, de préférence par condensation fractionnée.

3. Un procédé selon la revendication 1, selon lequel le chauffage inclut une période de traitement sous vide, la vapeur produite étant recueillie et les produits chimiques étant récupérés par condensation, de préférence par condensation fractionnée.

4. Un procédé selon la revendication 1, 2 ou 3, selon lequel la fourniture dudit milieu d'acétylation est réalisée par pulvérisation dudit milieu sur la matière.

5. Un procédé selon la revendication 1, 2 ou 3, selon lequel la fourniture dudit milieu d'acétylation est réalisée par immersion de la matière dans ledit milieu pendant une courte période de temps, de préférence inférieure à 15 min.

6. Un procédé selon la revendication 1, 2 ou 3, selon lequel la fourniture dudit milieu d'acétylation à ladite matière est réalisée par imprégnation sous vide.

7. Un procédé selon la revendication 1, 2 ou 3, selon lequel la fourniture dudit milieu d'acétylation à ladite matière est réalisée par imprégnation sous pression sous vide.

8. Un procédé selon la revendication 4, 5, 6 ou 7, selon lequel la matière lignocellulosique est sous la forme de bois de plaquage, de copeaux, d'écailles ou de fibres.

9. Un procédé selon les revendication 4, 5, 6 ou 7, selon lequel la quantité de milieu d'acétylation imprégné est de 10 à 250% en poids calculée sur la matière lignocellulosique séchée au four.

10. Un procédé selon la revendication 4 ou 5, selon lequel l'excès de milieu d'acétylation non imprégné dans la matière est séparé par égouttage par application des forces de compression à la matière, de préférence par passage de la matière à travers un dispositif de pressage à égouttage, ou par application d'une suction à un dispositif perforé supportant la matière imprégnée.

11. Un procédé selon l'une quelconque des revendications précédentes, selon lequel la matière acétylée est post-traitée par des produits chimiques, de préférence l'ammoniaque qui convertit l'anhydride acétique résiduel et l'acide acétique résiduel en acétate.

① a: Adjusted drying of lignocellulosic raw material

② b: Supplying liquid acetic anhydride to the material

③ c: Removing excess acetic anhydride solution

④ d: Acetylation of impregnated material in heated chamber

⑥ e: Post-treatment of acetylated material

⑦ Acetylated product

Acetic anhydride make-up

Acetic anhydride solution storage

Acetic acid

⑤ ⊗ Recovery of chemicals removed by a gasflow or by pulling a vacuum

FIG. 1